(19) **Europäisches Patentamt**

**European Patent Office**

**Office européen des brevets**

(11) **EP 1 029 232 B1**

(12) **EUROPÄISCHE PATENTSCHRIFT**

(45) Veröffentlichungstag und Bekanntmachung des Hinweises auf die Patenterteilung:
**16.07.2003 Patentblatt 2003/29**

(21) Anmeldenummer: **98962181.8**

(22) Anmeldetag: **27.10.1998**

(51) Int Cl.⁷: $G01N\ 21/17$, $G01N\ 25/18$

(86) Internationale Anmeldenummer:
**PCT/DE98/03137**

(87) Internationale Veröffentlichungsnummer:
**WO 99/024814 (20.05.1999 Gazette 1999/20)**

(54) **VERFAHREN UND VORRICHTUNGEN ZUM PHOTOTHERMISCHEN UNTERSUCHEN EINES PRÜFKÖRPERS**

PROCESSES AND DEVICES FOR THE PHOTOTHERMAL INSPECTION OF A TEST BODY

PROCEDE ET DISPOSITIFS D'ANALYSE THERMIQUE D'UN ECHANTILLON

(84) Benannte Vertragsstaaten:
**DE FR GB NL**

(30) Priorität: **12.11.1997 DE 19749984**

(43) Veröffentlichungstag der Anmeldung:
**23.08.2000 Patentblatt 2000/34**

(73) Patentinhaber: **FRAUNHOFER-GESELLSCHAFT ZUR FÖRDERUNG DER ANGEWANDTEN FORSCHUNG E.V.
80636 München (DE)**

(72) Erfinder:
• **WALLE, Günter
D-66399 Mandelbachtal (DE)**
• **NETZELMANN, Udo
D-66113 Saarbrücken (DE)**

• **VETTERLEIN, Thomas
D-63065 Offenbach am Main (DE)**

(74) Vertreter:
**RACKETTE Partnerschaft Patentanwälte
Kaiser-Joseph-Strasse 179
79098 Freiburg (DE)**

(56) Entgegenhaltungen:
**WO-A-98/05921          DE-A- 3 820 862
DE-A- 19 520 788       US-A- 3 451 254
US-A- 5 667 300**

• **PATENT ABSTRACTS OF JAPAN vol. 097, no. 010, 31. Oktober 1997 & JP 09 159631 A (CHOKOON ZAIRYO KENKYUSHO:KK), 20. Juni 1997**

**Beschreibung**

Die Erfindung betrifft Verfahren zum photothermischen Untersuchen eines Prüfkörpers, bei dem der Prüfkörper in einem Belichtungsbereich mit Belichtungsstrahlung während einer Belichtungsdauer beaufschlagt und von dem Prüfkörper aus einem Erfassungsbereich abgegebene Wärmestrahlung zeitaufgelöst erfaßt wird, wobei aus dem zeitlichen Verlauf der durch eine Emissionskurve mit einem Aufheizteil mit zunehmender Amplitude und einem Abkühlteil mit abnehmender Amplitude repräsentierbaren Wärmestrahlung Eigenschaften des Prüfkörpers bestimmt werden.

Die Erfindung betrifft weiterhin Vorrichtungen zum photothermischen Untersuchen eines Prüfkörpers, mit einer Beleuchtungseinrichtung, mit der ein Prüfkörper in einem Belichtungsbereich mit Belichtungsstrahlung während einer Belichtungsdauer beaufschlagbar ist, mit einer Detektionseinrichtung, mit der von dem Prüfkörper aus einem Erfassungsbereich abgegebene Wärmestrahlung zeitaufgelöst erfaßbar ist, und mit einer Steuer- und Auswerteeinrichtung, mit der aus dem zeitlichen Verlauf der durch eine Emissionskurve mit einem Aufheizteil mit zunehmender Amplitude und einem Abkühlteil mit abnehmender Amplitude repräsentierbaren Wärmestrahlung Eigenschaften des Prüfkörpers bestimmbar sind.

Derartige Verfahren und Vorrichtungen sind aus der DE 38 20 862 A1 bekannt. Ein Prüfkörper ist mittels einer Beleuchtungseinrichtung mit Belichtungsstrahlung in einem Belichtungsbereich während einer Belichtungsdauer beaufschlagt. Zum zeitaufgelösten Erfassen von von dem Prüfkörper aus einem Erfassungsbereich abgegebener Wärmestrahlung dient eine Detektionseinrichtung. Die erfaßte Wärmestrahlung ist bei Abtragung einer Temperatur gegen die Zeit durch eine Emissionskurve mit einem Aufheizteil mit zunehmender Amplitude und mit einem Abkühlteil mit abnehmender Amplitude repräsentierbar, wobei aus zeitlichen Korrelationen zwischen der Beaufschlagung des Prüfkörpers mit Belichtungsstrahlung und dem Verlauf der Emissionskurve Eigenschaften des Prüfkörpers bestimmt werden. Bei den gattungsgemäßen Verfahren und Vorrichtungen werden zum Erfassen von Fehlerstellen Abweichungen von Emissionsmeßkurven gegenüber anhand von Vorgabeparametern wie Wärmeleitfähigkeit, Absorptions- und/oder Emissionskoeffizient berechneten Emissionsmodellkurven bestimmt.

Aus der US-A-4,679,946 sind ein Verfahren und eine Vorrichtung zum Bestimmen sowohl einer Schichtdicke als auch von Materialparametern eines schichtartig aufgebauten Prüfkörpers bekannt, bei denen der Prüfkörper mit Belichtungsstrahlung beaufschlagt und von ihm abgegebene Wärmestrahlung erfaßt wird. Hierzu werden zwei voneinander unabhängig arbeitende Meßverfahren verwendet, wobei zum einen einer Oberflächentemperatur zugeordnete thermische Signale und zum anderen einer hauptsächlich als Funktion der Temperatur unterhalb der Oberfläche vorliegende Signale erfaßt und verarbeitet werden. Durch die Verwendung eines zweisegmentigen Detektors sind diese beiden Signaltypen zugleich unabhängig voneinander erfaßbar. Allerdings werden bei dieser Vorrichtung zwei als Laser ausgebildete Strahlungsquellen sowie das speziell ausgeführte Detektorelement benötigt.

Der Erfindung liegt die Aufgabe zugrunde, Verfahren und Vorrichtungen der eingangs genannten Art anzugeben, mit denen in apparativ wenig aufwendiger Weise Materialeigenschaften des Prüfkörpers auch bei Unkenntnis exakter Schichtdicken verhältnismäßig genau bestimmt werden können.

Diese Aufgabe wird bei dem eingangs genannten Verfahren in einer Ausgestaltung eines ersten Typs dadurch gelöst, daß eine impulsartige Belichtungsdauer eingestellt wird, die kleiner als der Quotient aus dem Quadrat eines Schätzwertes einer durch den Abstand von Grenzflächen gebildeten Schichtdicke und eines Schätzwertes für die Diffusivität zwischen den Grenzflächen ist, und daß aus wenigstens einem in dem Aufheizteil oder einem sich unmittelbar an den Aufheizteil anschließenden Abschnitt des Abkühlteiles mit einer hohen, einer Aufheizrate des Aufheizteiles entsprechenden Abkühlrate gelegenen Meßwert die Effusivität des Prüfkörpers bestimmt wird.

Diese Aufgabe wird bei der eingangs genannten Vorrichtung in einer Ausgestaltung eines ersten Typs dadurch gelöst, daß mit der Beleuchtungseinrichtung wenigstens eine Belichtungsdauer einstellbar ist, die kleiner als der Quotient aus dem Quadrat eines Schätzwertes einer durch den Abstand von Grenzflächen gebildeten Schichtdicke und eines Schätzwertes für die Diffusivität zwischen den Grenzflächen ist, und daß eine Recheneinheit vorgesehen ist, mit der aus wenigstens einem in dem Aufheizteil oder einem sich unmittelbar an den Aufheizteil anschließenden Abschnitt des Abkühlteiles mit einer hohen, einer Aufheizrate des Aufheizteiles entsprechenden Abkühlrate gelegenen Meßwert die Effusivität des Prüfkörpers bestimmbar ist.

Dadurch, daß bei dem Verfahren und der Vorrichtung des ersten Typs wenigstens ein Meßwert innerhalb des sehr kurzen Aufheizteiles oder in dem sich unmittelbar an das Ende der impulsartigen Belichtung anschließenden Teilabschnitt der Emissionskurve nach einer der Erfindung zugrundeliegenden Erkenntnis, daß bei impulsartiger Belichtung in diesem Bereich der Emissionskurve der Einfluß der Schichtdicke auf die Messung von Materialeigenschaften vernachlässigbar ist, erfaßt wird, lassen sich Materialeigenschaften auch bei Unkenntnis der Schichtdicke sehr genau aus wenigstens einem Meßwert bestimmen.

Diese Aufgabe wird weiterhin bei dem eingangs genannten Verfahren in einer Ausgestaltung eines zweiten Typs dadurch gelöst, daß wenigstens zwei Belichtungsdauern eingestellt werden, die kleiner als der Quotient aus dem Quadrat eines Schätzwertes für eine Schichtdichte der Beschichtung und eines Schätzwertes für die Diffusivität der Beschichtung sind, daß der Belichtungsbereich und der Erfassungsbereich mit einem Diffusionsabstand voneinander beabstandet werden, daß die sich für jede Belichtungsdauer im Erfassungsbereich einstellenden Maximalamplituden jeder Emissionskurve mit zugehörigen Einstellzeiten bestimmt werden und daß aus dem Verhältnis wenigstens zweier Maximalamplituden, dem Diffusionsabstand und den zugehörigen Einstellzeiten die Diffusivität bestimmt wird.

Diese Aufgabe wird bei der eingangs genannten Vorrichtung in einer Ausgestaltung eines zweiten Typs dadurch gelöst, daß mit der Beleuchtungseinrichtung wenigstens zwei Belichtungsdauern einstellbar sind, die kleiner als der Quotient aus dem Quadrat eines Schätzwertes einer durch den Abstand von Grenzflächen gebildeten Schichtdicke und eines Schätzwertes für die Diffusivität zwischen den Grenzflächen ist, daß der Belichtungsbereich und der Erfassungsbereich mit einem Diffussionsabstand voneinander beabstandet sind, daß mit einer Emissionsmaximumssucheinheit sich für jede Belichtungsdauer im Erfassungsbereich einstellenden Maximalamplituden jeder Emissionskurve mit zugehörigen Einstellzeiten bestimmbar sind und daß mit einer Diffusivitätsrecheneinheit aus dem Verhältnis zweier Maximalamplituden, dem Diffusionsabstand und den zugehörigen Einstellzeiten eine Diffusivität bestimmbar ist.

Dadurch, daß bei dem Verfahren und der Vorrichtung des zweiten Typs nach einer verhältnismäßig kurzen, impulsartigen Aufheizung die Ausbreitung der Wärmewellen über die Maximalamplituden von Emissionskurven nach unterschiedlich langer Belichtung erfaßt wird, läßt sich die Diffusivität bei Kenntnis des Diffusionsabstandes unabhängig von der Leistungsdichte der Belichtungsstrahlung bestimmen.

In zweckmäßigen Weiterbildungen des Verfahrens und der Vorrichtung des ersten Typs wird nach ermittelter Effusivität auch die Schichtdicke bestimmt, die aus dem Langzeitverlauf der Emissionkurve ermittelbar ist.

Zur Steigerung der Meßgenauigkeit der Effusivität ist in Weiterbildungen des Verfahrens und der Vorrichtung des ersten Typs vorgesehen, in dem Aufheizteil oder in dem sich unmittelbar an den Aufheizteil anschließenden Abkühlteil der Emissionskurve eine Anzahl von Emissionsmeßwerten zu erfassen und mit der Vorgabe von anhand Modellparametern berechneten Emissionsmodellkurven zu vergleichen, wobei aus der Emissionsmodellkurve mit den geringsten Abweichungen gegenüber den Meßwerten die Materialeigenschaften ableitbar sind.

Bei zweckmäßigen Weiterbildungen des Verfahrens und der Vorrichtung des zweiten Typs sind zwei Belichtungen mit vorzugsweise um einen Faktor zwei verschiedenen Belichtungsdauern vorgesehen, wobei die längere Belichtungsdauer der Hälfte des Quotienten aus dem Quadrat des Schätzwertes für eine Schichtdicke einer Beschichtung und dem Schätzwert für die Diffusivität der Beschichtung ist. Dadurch ist sichergestellt, daß der Einfluß der Schichtdicke vernachlässigbar ist.

Zur Erläuterung der physikalischen Zusammenhänge bei dem Verfahren und der Vorrichtung des ersten Typs seien nachfolgend einige Bestimmungsgleichungen angegeben.

Die Effusivität ist die Wurzel aus dem Produkt der Wärmeleitfähigkeit, der Dichte und der spezifischen Wärmekapazität. Unter Diffusivität versteht man den Quotient aus der Wärmeleitfähigkeit und der mit der Dichte multiplizierten spezifischen Wärmekapazität.

Aus der instationären Wärmeleitungstheorie ergibt sich beispielsweise folgender, eine Emissionskurve repräsentierender Temperaturverlauf an der Oberfläche eines Prüfkörpers für den Aufheizteil und den frühen Abkühlteil nach Ende der Belichtung mit einem kurzen Rechteckimpuls:

$$T(z=0,t) = \frac{2F_0}{\sqrt{\pi}} \cdot \frac{1}{E} \cdot \begin{cases} \sqrt{t} & \text{für } 0 \le t \le t_P \\ (\sqrt{t} - \sqrt{t - t_P}) & \text{für } t \ge t_P \end{cases} \qquad (1)$$

wobei $T(z=0,t)$ die Temperatur an der Oberfläche des Prüfkörpers ist, $F_0$ für die eingebrachte Leistungsdichte in W/cm$^2$ steht, E die Effusivität bezeichnet, $t_P$ die Belichtungsdauer repräsentiert und t die Zeit nach Beginn der Belichtung bezeichnet. Bei Erfassen eines oder mehrerer Emissionsmeßwerte zu bekannten Zeiten $t_i$, die im Aufheizteil oder in dem sich unmittelbar an den Aufheizteil anschließenden frühen Abkühlteil der Emissionskurve liegen, sowie der zugehörigen Temperaturen $T_1$ läßt sich aus obiger Gleichung bei Kenntnis der Leistungsdichte $F_0$ die Effusivität unabhängig von der Schichtdicke bestimmen.

Bei dem Verfahren und der Vorrichtung des zweiten Typs liegt der Bestimmung der Diffusivität folgende Gleichung zugrunde:

$$\frac{T_1}{T_2} = \frac{erfc\frac{r}{\sqrt{4\alpha t_1}}}{erfc\frac{r}{\sqrt{4\alpha t_2}}} \qquad (2)$$

wobei $T_1$, $T_2$ für die sich nach Belichtung mit Belichtungsdauern $t_1$, $t_2$ in einem Diffusionsabstand r von dem Belichtungsbereich einstellenden Temperaturen, $\alpha$ für die Diffusivität und "erfc" für die sogenannte komplementäre Gauß'sche Fehlerfunktion der Gestalt

$$erfc(x) = 1 - \frac{2}{\sqrt{\pi}} \int_0^x e^{-y^2} \, dy \qquad (3)$$

steht. Durch Variation der Diffusivität $\alpha$ läßt sich die aufgrund der Temperaturmessung, der Kenntnis des Diffusionsabstandes und der Belichtungsdauern eindeutige Gleichung (2) bei einer Diffusivität $\alpha$ erfüllen.

Weitere zweckmäßige Ausgestaltungen und Vorteile der Erfindung sind Gegenstand der Unteransprüche sowie der nachfolgenden Beschreibung von Ausführungsbeispielen mit Bezug auf die Figuren der Zeichnung. Es zeigen:

Fig. 1    in einer schematischen Darstellung ein Ausführungsbeispiel einer erfindungsgemäßen Vorrichtung beim Untersuchen eines Prüfkörpers mit einer eine Infrarotkamera aufweisenden Detektionseinrichtung,

Fig. 2    in einem Blockschaltbild die Vorrichtung gemäß Fig. 1,

Fig. 3    ein weiteres Ausführungsbeispiel einer erfindungsgemäßen Vorrichtung mit einer einen einzelligen Infrarotdetektor aufweisenden Detektionseinrichtung,

Fig. 4    in einem Blockschaltbild die Vorrichtung gemäß Fig. 3,

Fig. 5    Emissionskurven von Prüfkörpern mit Beschichtungen gleicher Materialzusammensetzung, jedoch unterschiedlicher Schichtdicke,

Fig. 6    Emissionskurven von Prüfkörpern mit Beschichtungen unterschiedlicher Materialzusammensetzungen, jedoch gleicher Schichtdicke,

Fig. 7    in einer schematischen Darstellung ein weiteres Ausführungsbeispiel einer Vorrichtung zum photothermischen Untersuchen eines Prüfkörpers mit einer in einem punktförmigen Belichtungsbereich fokussierenden Beleuchtungseinrichtung und einer Detektionseinrichtung mit einem punktförmigen, von dem Belichtungsbereich beabstandeten Erfassungsbereich beim Untersuchen eines Prüfkörpers und

Fig. 8    in einem Blockschaltbild die Vorrichtung gemäß Fig. 7.

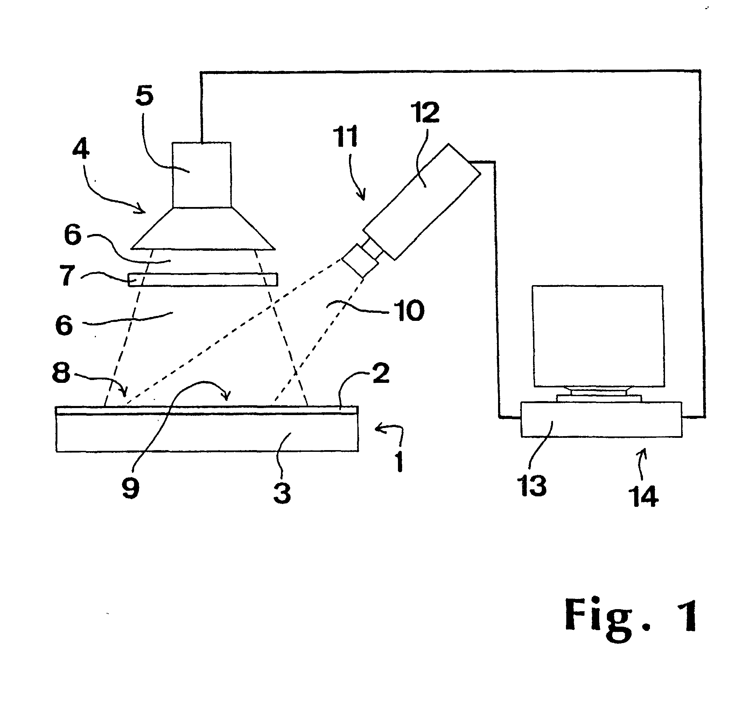

Fig. 1 zeigt in einer schematischen Darstellung ein Ausführungsbeispiel einer erfindungsgemäßen Vorrichtung zum photothermischen Untersuchen eines Prüfkörpers 1, der aus einem mit einer dünnen Beschichtung 2 versehenen Substrat 3 aufgebaut ist. Die Beschichtung 2 weist eine Schichtdicke auf, die durch den Abstand von zwei Grenzflächen der Beschichtung 2 gebildet ist. Die Vorrichtung gemäß Fig. 1 verfügt über eine Beleuchtungseinrichtung 4, die als Beleuchtungseinheit mit einer einstellbaren Belichtungsdauer $t_P$ eine Blitzlampe 5 aufweist. Mit der Blitzlampe 5 sind kurze, impulsartige Lichtblitze mit vorzugsweise intensiven Spektralkomponenten im sichtbaren Spektralbereich emittierbar, wobei die Belichtungsdauer $t_P$ kleiner als die Laufzeit von Wärmewellen durch die Beschichtung 2 zu der dem Prüfkörper 1 benachbarten Grenzfläche ist. Diese entspricht dem Quotienten aus dem Quadrat eines Wertes einer durch den Abstand von Grenzflächen gebildeten Schichtdicke der Beschichtung 2 und eines Wertes für die Diffusivität zwischen den Grenzflächen. Die Lichtblitze beaufschlagen als Belichtungsstrahlung 6 den Prüfkörper 1 nach Durchgang durch ein Infrarotfilter 7 zum Absorbieren von infraroten Spektralanteilen im wesentlichen mit ihren Spektralkomponenten im sichtbaren Spektralbereich in einem in diesem Ausführungsbeispiel flächenhaft ausgedehnten Belichtungsbereich 8 unter Auftreffen auf die Beschichtung 2.

Die Energie der Belichtungstrahlung 6 wird in Abhängigkeit des Absorptionskoeffizienten mit einem Wert vorzugsweise nahe eins im Belichtungsbereich 8 absorbiert, wobei ein Teil der absorbierten Energie wieder als Wärmestrahlung im infraroten Spektralbereich abgegeben wird. Zum Erfassen von aus einem innerhalb des Belichtungsbereiches 8 in einem Erfassungsbereich 9 gelegenen Teiles der Wärmestrahlung 10 verfügt die Vorrichtung gemäß Fig. 1 über eine Detektionseinrichtung 11 mit einer ortsauflösenden Infrarotkamera 12.

Weiterhin ist die Vorrichtung gemäß Fig. 1 mit einer als Arbeitsplatzrechner 13 ausgestalteten Steuer- und Auswerteeinrichtung 14 ausgestattet, an die die Blitzlampe 5 und die Infrarotkamera 12 angeschlossen sind.

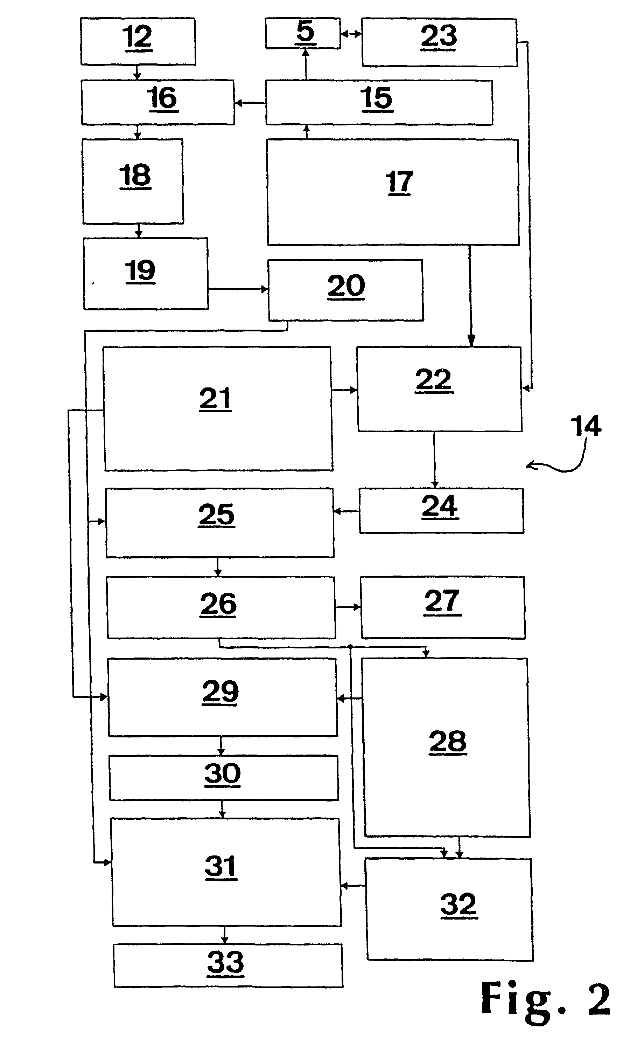

Fig. 2 zeigt in einem Blockschaltbild insbesondere die Steuer- und Auswerteeinrichtung 14 bei der beispielhaften Vorrichtung gemäß Fig. 1. Die Steuer- und Auswerteeinrichtung 14 verfügt über eine Steuereinheit 15, an die die Blitzlampe 5, eine mit der Infrarotkamera 12 verbundene Echtzeitbildaufnahmeeinheit 16 mit einer Dynamik von 12 Bit und einer Zeitauflösung von typischerweise besser einigen Millisekunden sowie ein Grenzzeitwertgeber 17 angeschlossen sind. Mittels des Grenzzeitwertgebers 17 sind der Steuereinheit 15 die Belichtungsdauer $t_P$, eine Bildaufnahmezeitdauer als Endzeitpunkt $t_E$ und ein Effusivitätsauswertezeitpunkt $t_A$ einspeisbar, wobei über die Bildaufnahmezeitdauer die Gesamtdauer der Aufnahme einer Emissionskurve und mit dem Effusivitätsauswertezeitpunkt $t_A$ der Zeitpunkt nach dem Beginn der Belichtung festgelegt wird, der die Grenze der sich unmittelbar an einen Aufheizteil anschließenden frühen Abkühlteil der Emmissionskurve zum Bestimmen der Effusivität festlegt. Die Belichtungsdauer $t_P$ entspricht zweckmäßigerweise etwa der Hälfte der Zeit von dem Beginn der Belichtung bis zu dem Effusivitätsauswertezeitpunkt $t_A$. Als Bildaufnahmezeitdauer ist beispielsweise das Zehnfache des Wertes vorgesehen, der sich aus dem Quotienten des Quadrates eines Schätzwertes für eine Schichtdicke und einem Schätzwert für eine Diffusivität der Beschichtung 2 ergibt. Als Effusivitätsauswertezeitpunkt $t_A$ ist es zweckmäßig, die Hälfte dieses Quotienten zu wählen.

Die Ausgangsdaten der Echtzeitbildaufnahmeeinheit 16 sind einer Bildspeichereinheit 18 einspeisbar, in der eine Anzahl von Bildern des Erfassungsbereiches 9 in einer zeitlichen Abfolge abspeicherbar sind, wobei die Anzahl der abspeicherbaren Bilder für eine hohe zeitliche Auflösung möglichst hoch ist. Zweckmäßige Bilderanzahlen liegen zwischen einigen 10 bis wenigen 1000 Bildern bei einer typischen Ortsauflösung von beispielsweise 128 x 128 Bildpunkten. An die Bildspeichereinheit 18 ist eine Bildprozessoreinheit 19 angeschlossen, mit der die der aus dem Erfassungsbereich 9 abgegebenen Wärmestrahlung 10 zugeordneten Daten vorzugsweise für alle Bildpunkte, aber beispielsweise auch für Bildausschnitte in dem zeitlichen Verlauf als Emissionsmeßkurven erfaßbar sind. Die Emissionsmeßkurven sind einem Emissionsmeßkurvenspeicher 20 einspeicherbar.

Weiterhin weist die Steuer- und Auswerteeinrichtung 14 einen Modellparameterspeicher 21 auf, in dem als Parameter für eine Berechnung von Emissionsmodellkurven die Wärmeleitfähigkeit, die Dichte, die spezifische Wärmekapazität sowie die Dicke des Substrates 3 des Prüfkörpers 1 gemäß Fig. 1 sowie zweckmäßigerweise weiterhin ein Schätzwert für die Schichtdicke der Beschichtung 2 und ein Schätzwert für die Effusivität der Beschichtung 2 des Prüfkörpers 1 abspeicherbar sind. Der Modellparameterspeicher 21 ist an eine Kurzzeitemissionsmodellkurvenrecheneinheit 22 angeschlossen. Die Kurzzeitemissionsmodellkurvenrecheneinheit 22 steht mit einer Heizenergiemeßeinheit 23 in Verbindung, mit der ein der den Prüfkörper 1 beaufschlagenden Belichtungsenergie zugeordneter Heizenergiemeßparameterwert erzeugbar ist. Mit der Kurzzeitemissionsmodellkurvenrecheneinheit 22 ist bei Variation des Modellparameters für die Effusivität im Bereich deren Schätzwertes im Zeitbereich bis zu dem in dem Grenzzeitwertgeber 17 abgelegten Effusivitätsauswertezeitpunkt $t_A$ unter Einschluß des Heizenergiemeßparameterwertes eine Anzahl von Emissionsmodellkurven berechenbar. Die mit der Kurzzeitemissionsmodellkurvenrecheneinheit 22 berechneten Kurzzeitemissionsmodellkurven sind einem Kurzzeitemissionsmodellkurvenspeicher 24 einspeicherbar.

Die Steuer- und Auswerteeinrichtung 14 weist weiterhin eine Kurzzeitemissionskurvenvergleichseinheit 25 auf, die mit den in den Emissionsmeßspeicher 20 abspeicherbaren Emissionsmeßkurven und den in dem Kurzzeitemissionsmodellkurvenspeicher 24 abspeicherbaren Kurzzeitemissionsmodellkurven beaufschlagbar ist. Mit der Kurzzeitemissionskurvenvergleichseinheit 25 sind mittels einer Vergleichsprozedur beispielsweise nach der Methode der kleinsten Quadrate in dem Zeitbereich bis zu dem Effusivitätsauswertezeitpunkt diejenigen Kurzzeitemissionsmodellkurven bestimmbar, die innerhalb des Zeitbereiches bis zu dem Effusivitätsauswertezeitpunkt mit den Emissionsmeßkurven der erfaßten Bildpunkte des Erfassungsbereiches 9 die jeweils beste Übereinstimmung aufweisen. Die der Berechnung der am besten angepaßten Kurzzeitemissionsmodellkurven zugrundeliegenden Effusivitätswerte sind einem Effusivitätsbildspeicher 26 als Effusivitätsbild des Erfassungsbereiches 9 einspeicherbar.

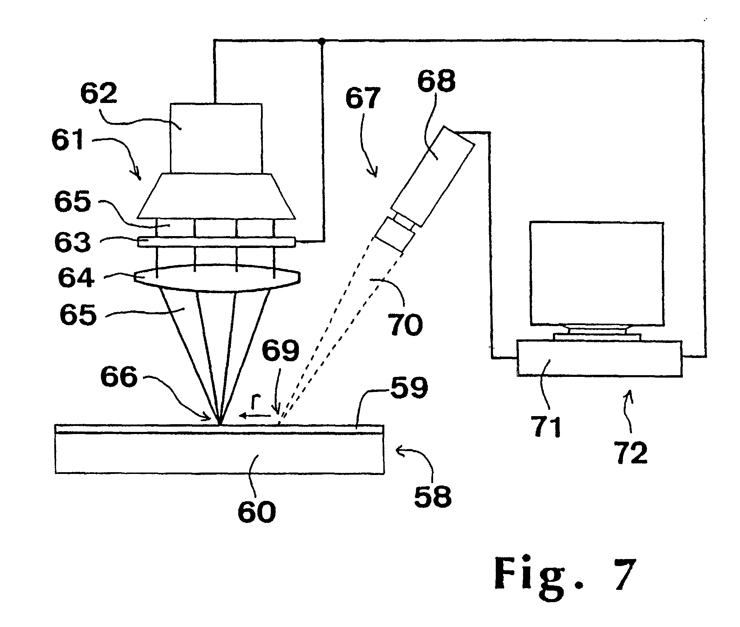

An den Effusivitätsbildspeicher 26 ist eine Ableitrecheneinheit 27 angeschlossen, mit der aus dem Wert für die Effusivität und einem Wert für die Diffusivität, der beispielsweise gemäß dem weiter unten anhand Fig. 7 erläuterten Ausführungsbeispiel ermittelbar ist, an einem Punkt der Beschichtung 2 die Wärmeleitfähigkeit und das Produkt aus der Dichte und der spezifischen Wärmekapazität an diesem Punkt der Beschichtung 2 des Prüfkörpers 1 bestimmbar sind. Weiterhin ist der Effusivitätsbildspeicher 26 an einen Effusivitätswertgeber 28 angeschlossen, mit dem das Minimum und das Maximum der in dem Effusivitätsbildspeicher 26 abgespeicherten Effusivitätswerte bestimmbar ist und eine Anzahl von vorzugsweise einen gleichen Abstand aufweisenden Effusivitätszwischenwerten zwischen dem minimalen Effusivitätswert und dem maximalen Effusivitätswert berechenbar sind.

Der Effusivitätswertgeber 28 ist an eine Langzeitemissionsmodellkurvenrecheneinheit 29 angeschlossen, der weiterhin die Modellparameter der Modellparameterspeichereinheit 21 einspeisbar sind. Mit der Langzeitemissionsmodellkurvenrecheneinheit 29 sind im Zeitbereich zwischen dem Effusivitätsauswertezeitpunkt $t_A$ und dem Endzeitpunkt der Bildaufnahmezeitdauer bei Variation der Schichtdicke im Bereich deren Schätzwertes für jeden Effusivitätszwischenwert sowie den minimalen und den maximalen Effusivitätswert Langzeitemissionsmodellkurven berechenbar, die in einem der Langzeitemissionsmodellkurvenrecheneinheit 29 nachgeordneten Langzeitemissionsmodellkurvenspeicher 30 abspeicherbar sind.

Der Speicherinhalt des Langzeitemissionsmodellkurvenspeichers 30 ist in eine Langzeitemissionskurvenvergleichseinheit 31 ausgebbar, die weiterhin mit dem Emissionsmeßkurvenspeicher 20 sowie einem Effusivitätsbildwandler 32 verbunden ist. Der Effusivitätsbildwandler 32 wiederum ist an den Effusivitätsbildspeicher 26 sowie den Effusivitätswertgeber 28 angeschlossen. Mit dem Effusivitätsbildwandler 32 ist dem Effusivitätswert an jedem Bildpunkt des Erfassungsbereiches 9 derjenige Zwischenwert beziehungsweise der minimale oder maximale Effusivitätswert des Effusivitätswertgebers 28 zuweisbar, der diesem Effusivitätswert an dem betreffenden Bildpunkt am nächsten liegt.

Mit der Langzeitemissionskurvenvergleichseinheit 31 ist mittels einer Vergleichsprozedur beispielsweise nach der Methode der kleinsten Quadrate für jeden Bildpunkt derjenige Schichtdickenwert bestimmbar, mittels dem sich die beste Übereinstimmung zwischen der betreffenden Emissionsmeßkurve dieses Bildpunktes und den entsprechenden Langzeitemissionsmodellkurven auf der Grundlage des gewandelten Effusivitätswertes aus dem Effusivitätsbildwandler 32 ergibt. Die mit der Langzeitemissionskurvenvergleichseinheit 31 bestimmten Schichtdickenwerte an den jeweiligen Bildpunkten des Erfassungsbereiches 9 sind in einem Schichtdickenbildspeicher 33 abspeicherbar.

Die Speicherinhalte des Effusivitätsbildspeichers 26 sowie des Schichtdickenbildspeichers 33 sind beispielsweise grafisch in einer Grauwert- oder Farbcodierung über eine in Fig. 1 nicht dargestellte Ausgabeeinheit der Steuer- und Auswerteeinrichtung 14 beispielsweise in Gestalt eines Bildschirmes oder Druckers ausgebbar.

Die anhand Fig. 1 und Fig. 2 erläuterte beispielhafte Vorrichtung eignet sich insbesondere zu einer im wesentlichen justagefreien ortsaufgelösten, aufgrund der Vergleichsprozedur von Emissionsmeßkurven mit Emissionsmodellkurven im Kurzzeitbereich bis zu dem Effusivitätsauswertezeitpunkt $t_A$ besonders präzisen Bestimmung der Effusivität und durch Vergleich von Emissionsmeßkurven und Emissionsmodellkurven im Langzeitbereich zwischen dem Effusivitätsauswertezeitpunkt und dem Ende der Bildaufnahmezeitdauer zu einer sehr exakten ortsaufgelösten Bestimmung der Schichtdicke der Beschichtung 2 des Prüfkörpers 1.

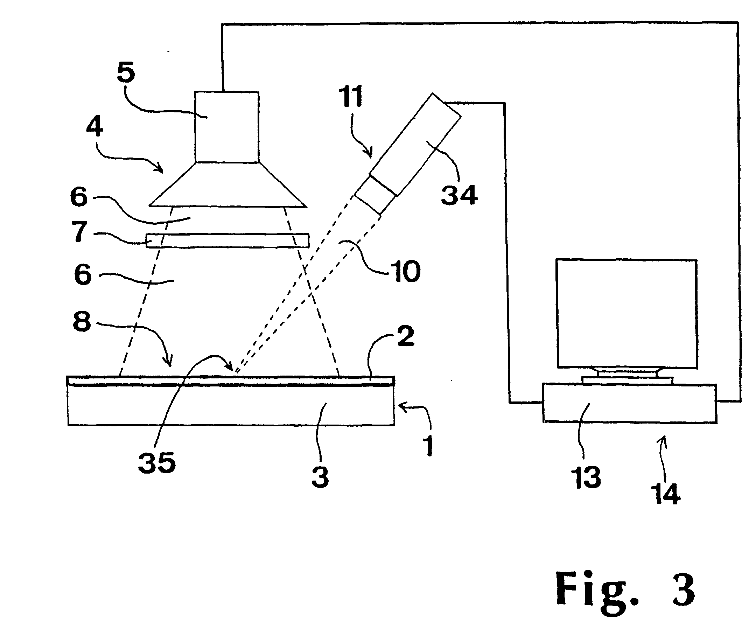

Fig. 3 zeigt in einer schematischen Darstellung ein weiteres Ausführungsbeispiel einer Vorrichtung zum photothermischen Untersuchen eines Prüfkörpers 1, das bis auf die Detektionseinrichtung 11 ähnlich dem anhand Fig. 1 erläuterten Ausführungsbeispiel aufgebaut ist. Dementsprechend sind die sich bei den Ausführungsbeispielen gemäß Fig. 1 und Fig. 3 entsprechende Bauelemente mit den gleichen Bezugszeichen versehen und im weiteren nicht näher erläutert. Die Detektionseinrichtung 11 bei dem Ausführungsbeispiel gemäß Fig. 3 ist als einzelliger Infrarotpunktdetektor 34 ausgebildet, mit dem Wärmestrahlung 10 aus einem innerhalb des Belichtungsbereiches 8 gelegenen, sehr kleinen, gegenüber dem Belichtungsbereich 8 quasi punktförmigen Erfassungsbereich 35 zeitaufgelöst erfaßbar ist.

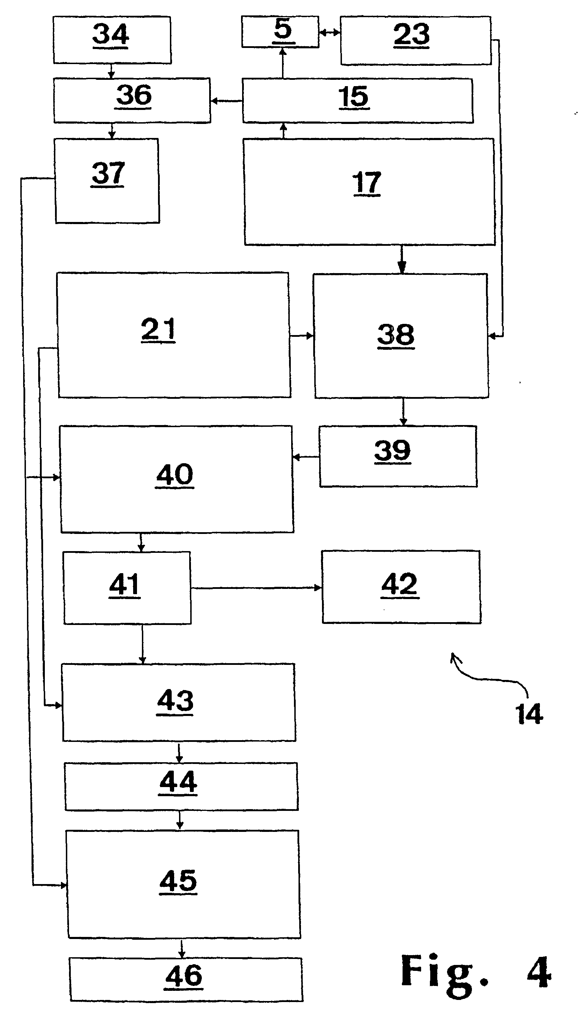

Fig. 4 zeigt in einem Blockschaltbild die Vorrichtung gemäß Fig. 3, wobei sich bei den Ausführungen der Steuer- und Auswerteeinrichtungen 14 gemäß Fig. 2 und Fig. 4 entsprechende Bauelemente mit den gleichen Bezugszeichen versehen und im weiteren nicht näher erläutert sind.

Der Infrarotpunktdetektor 34 ist an einen Meßsignalwandler 36 angeschlossen, der wiederum von der Steuereinheit 15 angesteuert ist. Die mittels des Infrarotpunktdetektors 34 aus dem punktförmigen Erfassungsbereich 35 erfaßte Wärmestrahlung 10 ist zeitaufgelöst als Einzelemissionsmeßkurve in einem an den Meßsignalwandler 36 angeschlossenen Einzelemissionsmeßkurvenspeicher 37 abspeicherbar.

Der Modellparameterspeicher 21 ist an eine Kurzzeitemissionsmodellwertrecheneinheit 38 angeschlossen, die selbst wiederum mit dem Grenzzeitwertgeber 17 und der Heizenergiemeßeinheit 23 in Verbindung steht. Mit der Kurzzeitemissionsmodellwertrecheneinheit 38 sind an einem Bestimmungszeitpunkt $t_B$ unter Berücksichtigung der den Prüfkörper 1 beaufschlagenden Heizenergie sowie der Modellparameter aus dem Modellparameterspeicher 21 bei Variation der Effusivität im Bereich des Effusivitätsschätzwertes die an diesem Bestimmungszeitpunkt $t_B$ herrschenden Temperaturen in Abhängigkeit der Effusivität als Emissionsmodellwerte berechenbar, wobei der Bestimmungszeitpunkt $t_B$ kleiner als der Effusivitätsauswertezeitpunkt $t_A$ ist. Beispielsweise liegt der Bestimmungszeitpunkt $t_B$ etwa bei der Hälfte der Zeit, die seit Beginn der Belichtung des Prüfkörpers 1 bis zu dem Effusivitätsauswertezeitpunkt $t_A$ verstrichen ist. Der Kurzzeitemissionsmodellwertrecheneinheit 38 ist ein Kurzzeitemissionsmodellwertespeicher 39 nachgeschaltet, in dem die zu dem Bestimmungszeitpunkt $t_B$ berechneten Emissionsmodellwerte abspeicherbar sind.

Die Steuer- und Auswerteeinrichtung 14 gemäß Fig. 4 weist weiterhin eine an den Kurzzeitemissionsmodellwertspeicher 39 und den Einzelemissionsmeßkurvenspeicher 37 angeschlossene Kurzzeitemissionswertvergleichseinheit 40 auf, mit der entsprechend der Funktionsweise der Kurzzeitemissionskurvenvergleichseinheit 25 gemäß Fig. 2 aus dem Emissionsmodellwert mit der geringsten Abweichung zu dem Emissionsmeßwert der Einzelemissionsmeßkurve zu dem Bestimmungszeitpunkt $t_B$ ein einzelner Effusivitätsmodellwert für den Erfassungsbereich 35 bestimmbar und in einem Einzeleffusivitätswertspeicher 41 abspeicherbar ist.

Der Einzeleffusivitätswert des Einzeleffusivitätswertspeichers 41 ist einer Einzelableitrecheneinheit 42 zur Berechnung der Wärmeleitfähigkeit und des Produkts aus der Dichte und der spezifischen Wärmekapazität entsprechend der Funktionsweise der Ableitrecheneinheit 27 einspeisbar.

Dem Einzeleffusivitätswertspeicher 41 und dem Modellparameterspeicher 21 ist eine Langzeitemissionsmodellkurvenrecheneinheit 43 nachgeschaltet, mit der bei Variation der Schichtdicke der Beschichtung 2 im Bereich deren Schätzwertes und dem in dem Einzeleffusivitätswertspeicher 41 abgespeicherten Effusivitätswert Langzeitemissionsmodellkurven in einem Zeitbereich zwischen dem Effusivitätsauswertezeitpunkt $t_A$ und dem Endzeitpunkt $t_E$ der Meßdauer berechenbar sind. Die mittels der Langzeitemissionsmodellkurvenrecheneinheit 43 berechneten Langzeitemissionsmodellkurven sind einem Langzeitemissionsmodellkurvenspeicher 44 einspeisbar, dem eine Langzeitemissionskurvenvergleichseinheit 45 nachgeschaltet ist.

Mit der auch an den Einzelemissionsmeßkurvenspeicher 37 angeschlossenen Langzeitemissionskurvenvergleichseinheit 45 ist in einer Vergleichsprozedur beispielsweise nach der Methode der kleinsten Quadrate innerhalb des Zeitbereiches zwischen dem Effusivitätsauswertezeitpunkt $t_A$ und dem Endzeitpunkt $t_E$ der Meßdauer die Schichtdicke der Beschichtung 2 an dem betreffenden Bildpunkt aufgrund der besten Übereinstimmung einer Langzeitemissionsmodellkurve mit der Emissionsmeßkurve in dem entsprechenden Zeitbereich bestimmbar. Der mittels der Langzeitemissionskurvenvergleichseinheit 45 bestimmte Schichtdickenwert ist in einem nachgeschalteten Schichtdickenwertspeicher 46 abspeicherbar und beispielsweise über einen in Fig. 4 nicht dargestellten Bildschirm oder einen Drucker der Steuer- und Auswerteeinrichtung 14 ausgebbar.

Das Ausführungsbeispiel gemäß Fig. 3 und Fig. 4 ist insbesondere dann zweckmäßig verwendbar, wenn eine besonders schnelle Bestimmung der Effusivität und der Schichtdicke in einem punktförmigen Erfassungsbereich 35 erfolgen soll.

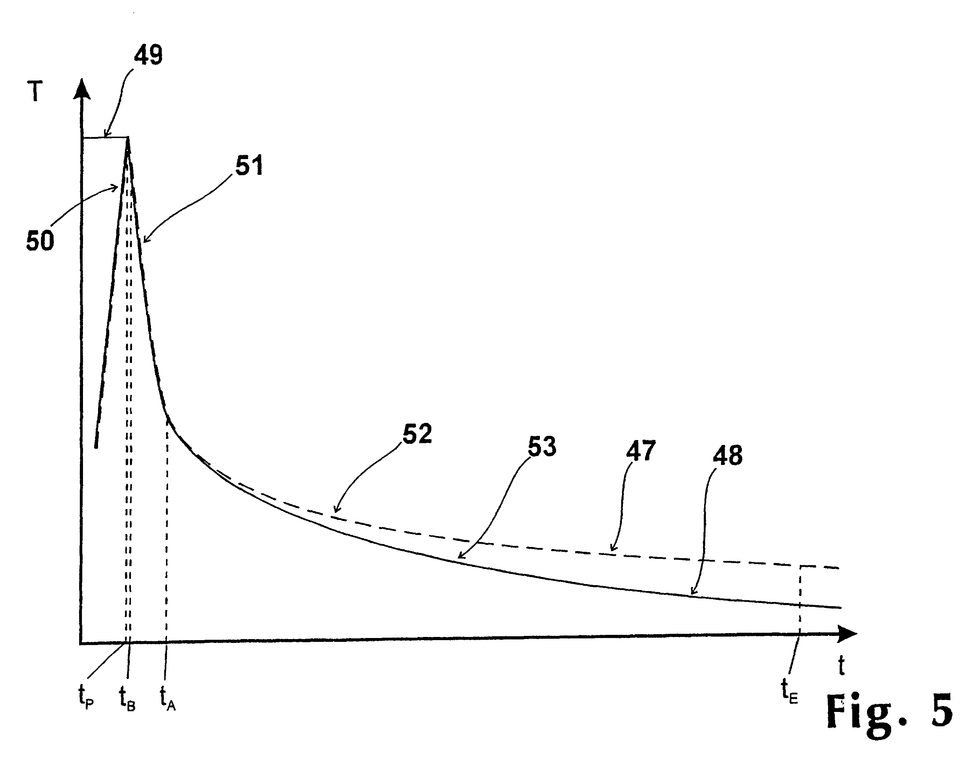

Fig. 5 zeigt in einem Schaubild beispielhaft eine erste Emissionsmodellkurve 47 und eine zweite Emissionsmodellkurve 48, wie sie sich in einem Teilbereich des Erfassungsbereiches 9 oder in einem punktförmigen Erfassungsbereich 35 nach Belichtung mit kurzen Lichtblitzen 49 aus der als Blitzlampe 5 ausgebildeten Beleuchtungseinheit gemäß numerischen Modellrechnungen ergeben. In dem Schaubild gemäß Fig. 5 ist der zeitliche Verlauf der Amplitude der Emissionsmodellkurven 47, 48 in dieser Darstellung als Temperatur "T" entlang einer Zeitachse "t" abgetragen. Die Belichtungsdauer $t_P$ des Lichtblitzes 49 ist gleich der Aufheizzeitdauer des bis zu einer Maximaltemperatur ansteigenden Aufheizteiles 50 beider Emissionsmodellkurven 47, 48. Neben dem sich an den Aufheizteil 50 anschließenden Abschnitt 51 der Abkühlteile 52, 53 bis zu dem Effusivitätsauswertezeitpunkt $t_A$ ist auch der Aufheizteil 50 zur Bestimmung der Effusivität verwendbar.

Aus Fig. 5 ist ebenfalls ersichtlich, daß der sich unmittelbar an den Aufheizteil 50 anschließende Abschnitt 51 der Abkühlteile 52, 53 der unterschiedlichen Schichtdicken von Beschichtungen 2 zugeordneten Modellemissionskurven 47, 48 im wesentlichen deckungsgleich ist, so daß bei einer Auswertung von Emissionsmeßkurven bis zu dem Effusivitätsauswertezeitpunkt $t_A$ wenigstens anhand eines Meßwertes sowie wenigstens einem zugeordneten Emissionsmodellwert die Effusivität unabhängig von der Schichtdicke der Beschichtungen 2 bestimmbar ist.

Weiterhin ist bei einer Auswertung der Emissionsmeßkurven zwischen dem Effusivitätsauswertezeitpunkt $t_A$ bis zu dem Endzeitpunkt $t_E$ der Bildaufnahmezeitdauer bei einem zuvor bestimmten Effusivitätswert aus dem dann voneinander abweichenden Verlauf der Abkühlteile 52, 53 der Emissionsmodellkurven 47, 48 mittels Vergleich mit der Emissionsmeßkurve die Schichtdicke der Beschichtung 2 des Prüfkörpers 1 genau bestimmbar.

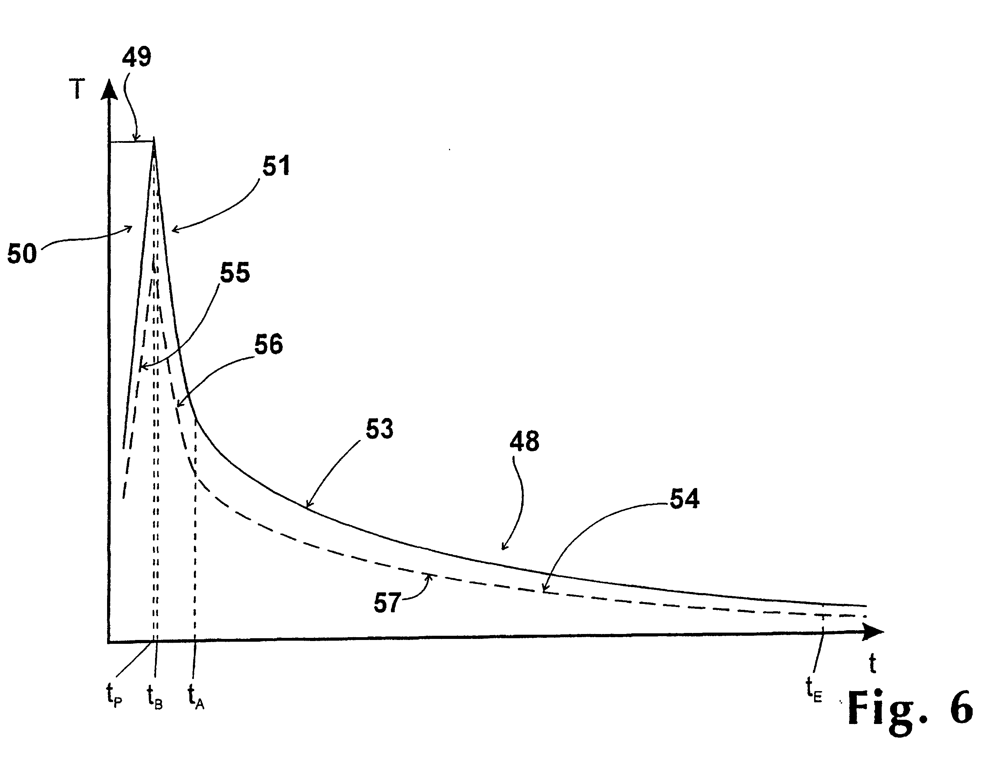

Fig. 6 zeigt in einem Schaubild die zweite Emissionsmodellkurve 48 gemäß Fig. 5 im Vergleich mit einer dritten Emissionsmodellkurve 54, wobei den in Fig. 6 dargestellten Emissionsmodellkurven 48, 54 jeweils ein Prüfkörper 1 mit gleichem Substrat 3 und gleicher Schichtdicke einer Beschichtung 2 aus jedoch verschiedenen Materialien zugrunde liegen. Aufgrund der unterschiedlichen Materialien der Beschichtungen 2 und der in der Regel unterschiedlichen zugehörigen Effusivitäten ist ein Aufheizteil 55, ein sich unmittelbar an den Aufheizteil 55 anschließender Abschnitt 56 und auch der übrige Verlauf eines Abkühlteiles 57 der dritten Emissionsmodellkurve 54 von dem Verlauf der zweiten Emissionsmodellkurve 48 verschieden. Dadurch lassen sich unterschiedliche Materialien einer Beschichtung 2 eines Prüfkörpers 1 über deren unterschiedliche Effusivitäten bestimmen.

Fig. 7 zeigt in einer schematischen Darstellung ein weiteres Ausführungsbeispiel einer Vorrichtung zum photothermischen Untersuchen eines Prüfkörpers 58, der aus einem mit einer Beschichtung 59 versehenen Substrat 60 aufgebaut ist. Die Vorrichtung gemäß Fig. 7 verfügt über eine Beleuchtungseinrichtung 61, die als Strahlungsquelle über einen vorzugsweise im sichtbaren Spektralbereich kontinuierlich emittierenden Laser 62 verfügt. Dem Laser 62 ist eine Verschlußeinheit 63 sowie eine Fokussieroptik 64 nachgeordnet, mit der bei geöffneter Verschlußeinheit 63 von dem Laser 62 emittierte Belichtungsstrahlung 65 in einem punktförmigen Belichtungsbereich 66 auf die Beschichtung 59 des Prüfkörpers 58 fokussierbar ist.

Weiterhin weist die Vorrichtung gemäß Fig. 7 eine Detektionseinrichtung 67 mit einem einzelligen Infrarotpunktdetektor 68 auf. Der Infrarotpunktdetektor 68 ist mit einem punktförmigen Erfassungsbereich 69 in einem mit einem Pfeil angedeuteten Mittenabstand r als Abstand von dem punktförmigen Belichtungsbereich 66 zum Erfassen aus von dem Erfassungsbereich 69 emittierter Wärmestrahlung 70 ausgerichtet.

Die Vorrichtung gemäß Fig. 7 ist mit einer beispielsweise als Arbeitsplatzrechner 71 ausgestalteten Steuer- und Auswerteeinrichtung 72 ausgestattet, an die der Laser 62, die Verschlußeinheit 63 und der Infrarotpunktdetektor 68 zur Steuerung der Belichtung und Erfassung von Wärmestrahlung 70 sowie zur Auswertung angeschlossen sind.

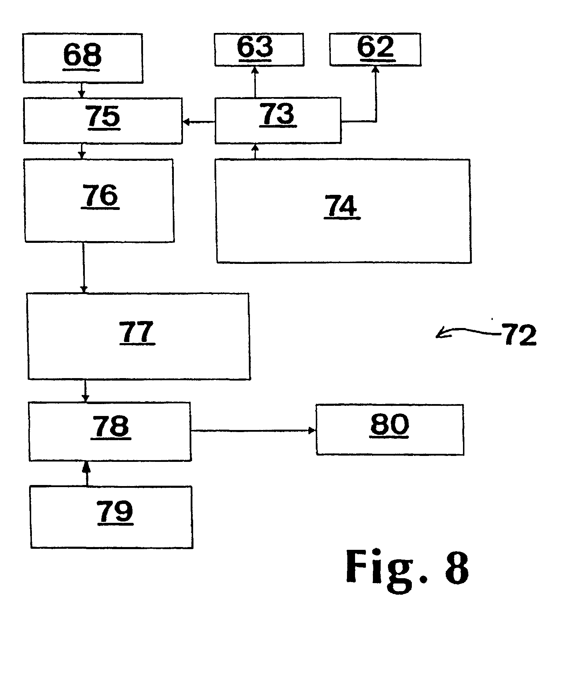

Fig. 8 zeigt in einem Blockschaltbild die Vorrichtung gemäß Fig. 7 insbesondere mit dem Aufbau der Steuer- und Auswerteeinrichtung 72. Die Steuer- und Auswerteeinrichtung 72 weist eine Steuereinheit 73 auf, der zur Steuerung einer Belichtungsdauer aus einem Belichtungszeitgeber 74 wenigstens zwei Belichtungsdauern zugeordnete Steuerdaten einspeisbar sind. Beispielsweise entspricht eine kürzere erste Belichtungsdauer einem Viertel des Quotienten aus dem Quadrat eines Schätzwertes für eine Schichtdicke der Beschichtung 59 und einem Schätzwert für eine Diffusivität der Beschichtung 59 sowie eine längere zweite Belichtungsdauer der Hälfte dieses Quotienten. Mit den aus dem Belichtungszeitgeber 74 übergebenen Belichtungsdauern ist die Verschlußeinheit 63 entsprechend betätigbar. Weiterhin ist der Laser 62 zur Funktionsüberwachung an die Steuereinheit 73 angeschlossen.

Dem Infrarotpunktdetektor 68 ist zur digitalisierten Datenaufnahme ein Meßsignalwandler 75 nachgeschaltet, der zur getakteten Signalwandlung ebenfalls mit der Steuereinheit 73 verbunden ist. Die jeweils einer Belichtungsdauer zugeordneten Ausgangsdaten des Meßsignalwandlers 75, die dem zeitlichen Verlauf der typischerweise durch einen zugeordneten Temperaturwert gekennzeichneten Intensität der Wärmestrahlung 70 aus dem in einem Diffusionsabstand r von dem Belichtungsbereich 66 angeordneten Erfassungbereich 69 entsprechen, sind als Emissionsmeßkurven in einem Emissionsmeßkurvenspeicher 76 abspeicherbar.

Die in dem Emissionsmeßkurvenspeicher 76 abspeicherbaren Emissionsmeßkurven sind an eine Emissionsmaximumssucheinheit 77 übergebbar, mittels der für jede Emissionsmeßkurve eine dem Maximum der Emission zugeordnete Maximaltemperatur nach Beginn der Belichtung sowie über direkte Auswertung der Emissionsmeßkurve oder alternativ über Eingabe einer Belichtungsdauer der Zeitpunkt der maximalen Emission bestimmbar ist. Die Steuer- und Auswerteeinrichtung 72 verfügt weiterhin über eine Diffusivitätsrecheneinheit 78, die zum einen mit der Emissionsmaximumssucheinheit 77 und zum anderen mit einem Modellparameterspeicher 79 verbunden ist. In dem Modellparameterspeicher 79 sind der Mittenabstand r zwischen dem punktförmigen Belichtungsbereich 66 und dem punktförmigen Erfassungsbereich 69 sowie ein Schätzwert für die Diffusivität abspeicherbar. Mit der Diffusivitätsrecheneinheit 78 ist mit einem numerischen Verfahren, beispielsweise dem Newton-Verfahren, durch Variation des Schätzwertes der Diffusivität in der oben angegebenen Gleichung (2) die Diffusivität der Beschichtung 59 bestimmbar.

Weiterhin verfügt die Steuer- und Auswerteeinrichtung 72 über eine Ableitrecheneinheit 80, die mit der Diffusionsrecheneinheit 78 verbunden ist. Mittels der Ableitrecheneinheit 80 sind außer der ermittelten Diffusivität und der beispielsweise mittels einer der vorgenannten Vorrichtungen gemäß Fig. 1 und Fig. 2 beziehungsweise Fig. 3 und Fig. 4 ermittelten Effusivität die Wärmeleitfähigkeit sowie das Produkt aus der Dichte und der spezifischen Wärmekapazität der Beschichtung 59 bestimmbar.

Es versteht sich, daß die Detektionseinrichtung 67 gemäß Fig. 7 auch mit einer Infrarotzeilenkamera oder einer flächig detektierenden Infrarotkamera ausgestattet sein kann.

## Patentansprüche

1. Verfahren zum photothermischen Untersuchen eines Prüfkörpers, bei dem der Prüfkörper (1) in einem Belichtungsbereich (8) mit Belichtungsstrahlung (6) während einer Belichtungsdauer beaufschlagt und von dem Prüfkörper (1) aus einem Erfassungsbereich (9, 35) abgegebene Wärmestrahlung (10) zeitaufgelöst erfaßt wird, wobei aus dem zeitlichen Verlauf der durch eine Emissionskurve (47, 48, 54) mit einem Aufheizteil (50, 55) mit zunehmender Amplitude und einem Abkühlteil (52, 53, 57) mit abnehmender Amplitude repräsentierbaren Wärmestrahlung (10) Eigenschaften des Prüfkörpers (1) bestimmt werden, **dadurch gekennzeichnet, daß** eine Belichtungsdauer ($t_P$) eingestellt wird, die kleiner als der Quotient aus dem Quadrat eines Schätzwertes einer durch den Abstand von Grenzflächen gebildeten Schichtdicke und eines Schätzwertes für die Diffusivität zwischen den Grenzflächen ist, und daß aus wenigstens einem in dem Aufheizteil (50, 55) oder einem sich unmittelbar an den Aufheizteil (50, 55) anschließenden Abschnitt (51, 56) des Abkühlteiles (52, 53, 57) mit einer hohen, einer Aufheizrate des Aufheizteiles (50, 55) entsprechenden Abkühlrate gelegenen Meßwert die Effusivität des Prüfkörpers (1) bestimmt wird.

2. Verfahren nach Anspruch 1, **dadurch gekennzeichnet, daß** der oder jeder Meßwert in dem sich an den Aufheizteil (50, 55) anschließenden Abkühlteil (52, 53, 57) erfaßt wird.

3. Verfahren nach Anspruch 1 oder 2, **dadurch gekennzeichnet, daß** aus dem Langzeitverlauf der Emissionskurve nach ermittelter Effusivität die Schichtdicke einer Beschichtung (2) des Prüfkörpers (1) bestimmt wird.

4. Vorrichtung zum photothermischen Untersuchen eines Prüfkörpers, insbesondere zum Durchführen eines Verfahrens nach einem der Ansprüche 1 bis 3, mit einer Beleuchtungseinrichtung (4, 5), mit der ein Prüfkörper (1) in einem Belichtungsbereich (8) mit Belichtungsstrahlung (6) während einer Belichtungsdauer beaufschlagbar ist, mit einer Detektionseinrichtung (11), mit der von dem Prüfkörper (1) aus einem Erfassungsbereich (9, 35) abgegebene Wärmestrahlung (10) zeitaufgelöst erfaßbar ist, und mit einer Steuer- und Auswerteeinrichtung (14), mit der aus dem zeitlichen Verlauf der durch eine Emissionskurve (47, 48, 54) mit einem Aufheizteil (50, 55) mit zunehmender Amplitude und einem Abkühlteil (52, 53, 57) mit abnehmender Amplitude repräsentierbaren Wärmestrahlung (10) Eigenschaften des Prüfkörpers (1) bestimmbar sind, **dadurch gekennzeichnet, daß** mit der Beleuchtungseinrichtung (4, 5) wenigstens eine Belichtungsdauer einstellbar ist, die kleiner als der Quotient aus dem Quadrat eines Schätzwertes einer durch den Abstand von Grenzflächen gebildeten Schichtdicke und eines Schätzwertes für die Diffusivität zwischen den Grenzflächen ist, und daß eine Recheneinheit (21 bis 28) vorgesehen ist, mit der aus wenigstens einem in dem Aufheizteil (50, 55) oder einem sich unmittelbar an den Aufheizteil (50, 55) anschließenden Abschnitt (51, 56) des Abkühlteiles (52, 53, 57) mit einer hohen, einer Aufheizrate des Aufheizteiles (50, 55) entsprechenden Abkühlrate gelegenen Meßwert die Effusivität des Prüfkörpers (1) bestimmbar ist.

5.  Vorrichtung nach Anspruch 4, **dadurch gekennzeichnet, daß** mit der Detektionseinheit (11, 12, 34) in dem Aufheizteil (50, 55) undloder dem sich unmittelbar an den Aufheizteil (50, 55) anschließenden Abschnitt (51, 56) des Abkühlteiles (52, 53, 57) der Emissionskurve (47, 48, 54) mehrere Meßwerte erfaßbar sind.

6.  Vorrichtung nach Anspruch 4 oder 5, **dadurch gekennzeichnet, daß** mit der Detektionseinrichtung (11, 12, 34) mehrere Meßwerte in dem sich an den Aufheizteil (50, 55) anschließenden Abschnitt (51, 56) des Abkühlteiles (52, 53, 57) bis zu einem Mehrfachen der Zeitdauer des Aufheizteiles (50, 55) erfaßbar sind.

7.  Vorrichtung nach Anspruch 5, **dadurch gekennzeichnet, daß** ein Modellparameterspeicher (21) vorgesehen ist, in dem als Parameter Vorgabewerte für eine Wärmeleitfähigkeit und das Produkt aus Dichte und spezifischer Wärmekapazität eines Substrates (3) sowie ein Schätzwert für eine Effusivität und ein Schätzwert für eine Schichtdicke einer Beschichtung (2) des Prüfkörpers (1) abspeicherbar sind, daß eine Heizenergiemeßeinheit (23) vorgesehen ist, mit der ein der den Prüfkörper (1) beaufschlagenden Energie der Belichtungsstrahlung (6) zugeordneter Heizenergiemeßparameterwert bestimmbar ist, daß eine Kurzzeitemissionsmodellkurvenrecheneinheit (22) vorgesehen ist, mit der mittels des Heizenergiemeßparamterwertes und der weiteren vorgegebenen Parameter Anfangsemissionsmodellkurven bei Variation der Effusivität im Bereich des zugehörigen Schätzwertes wenigstens in den Abschnitten (50, 51, 55, 56) der Emissionskurven (47, 48, 54) berechenbar sind, in denen zur Bestimmung der Effusivität ermittelte Meßwerte liegen, und daß mit einer Kurzzeitemissionskurvenvergleichseinheit (25) die Anfangsemissionsmodellkurve die mit der entsprechenden Effusivität bestimmbar ist, die gegenüber den Meßwerten die geringsten Abweichungen aufweist.

8.  Vorrichtung nach Anspruch 6 oder 7, **dadurch gekennzeichnet, daß** eine Langzeitemissionsmodellkurvenrecheneinheit (29) vorgesehen ist, mit der mittels der vorgegebenen Parameter die Abschnitte der Abkühlteile (52, 53, 57) einer Anzahl von Abkühlmodellkurven berechenbar sind, in denen die Meßwerte liegen, und daß mit einer Langzeitemissionskurvenvergleichseinheit (25) die Abkühlmodellkurve mit den geringsten Abweichungen gegenüber den Meßwerten bestimmbar ist.

9.  Verfahren zum photothermischen Untersuchen eines Prüfkörpers, bei dem der Prüfkörper (58) in einem Belichtungsbereich (66) mit Belichtungsstrahlung (65) während einer Belichtungsdauer beaufschlagt und von dem Prüfkörper (58) aus einem Erfassungsbereich (69) abgegebene Wärmestrahlung (70) erfaßt wird, wobei aus dem zeitlichen Verlauf der durch eine Emissionskurve mit einem Aufheizteil mittels zunehmender Amplitude und einem Abkühlteil mit abnehmender Amplitude repräsentierbaren Wärmestrahlung (70) Eigenschaften des Prüfkörpers (58) bestimmt werden, **dadurch gekennzeichnet, daß** wenigstens zwei Belichtungsdauern ($t_P$) eingestellt werden, die kleiner als der Quotient aus dem Quadrat eines Schätzwertes einer durch den Abstand von Grenzflächen gebildeten Schichtdicke und eines Schätzwertes für die Diffusivität zwischen den Grenzflächen sind, daß der Belichtungsbereich (66) und der Erfassungsbereich (69) mit einem Diffusionsabstand voneinander beabstandet werden, daß die sich für jede Belichtungsdauer im Erfassungsbereich (69) einstellende Maximalamplitude jeder Emissionskurve mit zugehörigen Einstellzeiten bestimmt werden und daß aus dem Verhältnis wenigstens zweier Maximalamplituden, dem Diffusionsabstand und den zugehörigen Einstellzeiten die Diffusivität bestimmt wird.

10. Verfahren nach Anspruch 9, **dadurch gekennzeichnet, daß** jede Belichtungsdauer höchstens der Hälfte des Quotienten entspricht.

11. Verfahren nach Anspruch 9 oder 10, **dadurch gekennzeichnet, daß** die Diffusivität einer Beschichtung (59) des Prüfkörpers (58) bestimmt wird.

12. Verfahren nach Anspruch 10 oder 11, **dadurch gekennzeichnet, daß** aus der Diffusivität und einer insbesondere nach einem Verfahren gemäß einem der Ansprüche 1 bis 3 bestimmten Effusivität das Produkt aus der Dichte und der spezifischen Wärmekapazität sowie eine Wärmeleitfähigkeit bestimmt werden.

13. Vorrichtung zum photothermischen Untersuchen eines Prüfkörpers, insbesondere zum Durchführen eines Verfahrens gemäß einem der Ansprüche 9 bis 12, mit einer Beleuchtungseinrichtung (61, 62), mit der ein Prüfkörper (1) in einem Belichtungsbereich (66) mit Belichtungsstrahlung (65) während einer Belichtungsdauer beaufschlagbar ist, mit einer Detektionseinrichtung (67, 68), mit der von dem Prüfkörper (58) aus einem Erfassungsbereich (69) abgegebene Wärmestrahlung (70) zeitaufgelöst erfaßbar ist, und mit einer Steuer- und Auswerteeinrichtung (72), mit der aus dem zeitlichen Verlauf der durch eine Emissionskurve mit einem Aufheizteil mit zunehmender Amplitude und einem Abkühlteil mit abnehmender Amplitude repräsentierbaren Wärmestrahlung (70) Eigenschaften des Prüfkörpers (58) bestimmbar sind, **dadurch gekennzeichnet, daß** mit der Beleuchtungseinrichtung (61, 62, 63) wenigstens zwei Belichtungsdauern einstellbar sind, die kleiner als der Quotient aus dem Quadrat eines Schätzwertes einer durch den Abstand von Grenzflächen gebildeten Schichtdicke und eines Schätzwertes für die Diffusivität zwischen den Grenzflächen sind, daß der Belichtungsbereich (66) und der Erfassungsbereich (69) mit einem Diffussionsabstand (r) voneinander beabstandet sind, daß mit einer Emissionsmaximumssucheinheit (77) sich für jede Belichtungsdauer im Erfassungsbereich (69) einstellenden Maximalamplituden jeder Emissionskurve mit zugehörigen Einstellzeiten bestimmbar sind und daß mit einer Diffusivitätsrecheneinheit (78) aus dem Verhältnis zweier Maximalamplituden, dem Diffusionsabstand und den zugehörigen Einstellzeiten eine Diffusivität bestimmbar ist.

14. Vorrichtung nach Anspruch 13, **dadurch gekennzeichnet, daß** der Belichtungsbereich (69) und vorzugsweise auch der Erfassungsbereich (66) punktförmig sind.

15. Vorrichtung nach Anspruch 13 oder 14, **dadurch gekennzeichnet, daß** jede Belichtungsdauer höchstens der Hälfte des Quotienten aus dem Quadrat eines Schätzwertes für die Schichtdicke einer Beschichtung (59) des Prüfkörpers (58) und einem Schätzwert für die Diffusivität der Beschichtung (2) entspricht.

16. Vorrichtung nach einem der Ansprüche 13 bis 15, **dadurch gekennzeichnet, daß** die kürzere Belichtungsdauer etwa halb so lang wie die längere Belichtungsdauer ist.

## Claims

1. Method for photothermal investigation of a test body, whereby the test body (1) is irradiated in an illumination region (8) with illumination radiation (6) for an exposure time and heat radiation (10) emitted by the test body (1) from a detection region (9, 35) is detected in time-resolved manner, whereby from the chronological sequence of the heat radiation (10) representable by an emission curve (47, 48, 54) with a heating-up portion (50, 55) of increasing amplitude and a cooling-down portion (52, 53, 57) of decreasing amplitude, properties of the test body (1) are determined, **characterised in that** an exposure time ($t_p$) is set which is smaller than the quotient of the square of an estimated value of a layer thickness formed by the separation of boundary surfaces and an estimated value of the diffusivity between the boundary surfaces, and that from at least one measurement value situated in the heating-up portion (50, 55) or in a section (51, 56) of the cooling-down portion (52, 53, 57) immediately following the heating-up portion (50, 55) and having a high cooling-down rate corresponding to a heating-up rate of the heating-up portion (50, 55), the effusivity of the test body (1) is determined.

2. Method according to Claim 1, **characterised in that** the or each measurement value is detected in the cooling-down portion (52, 53, 57) following the heating-up portion (50, 55).

3. Method according to Claim 1 or 2, **characterised in that** from the long-period shape of the emission,curve, the layer thickness of a coating (2) of the test body (1) is determined according to the derived effusivity.

4. Device for photothermal investigation of a test body, in particular, for carrying out a method according to one of the claims 1 to 3, having an illumination device (4, 5) with which a test body (1) is irradiatable in an illumination region (8) with illumination radiation (6) for an exposure time, having a detection device (11) with which heat radiation (10) emitted by the test body (1) is detectable from a detection region (9, 35) in time-resolved manner, and having a control and evaluation device (14) with which from the chronological sequence of the heat radiation (10) representable by an emission curve (47, 48, 54) with a heating-up portion (50, 55) of increasing amplitude and a cooling-down portion (52, 53, 57) of decreasing amplitude, properties of the test body (1) may be determined, **characterised in that** with the illumination device (4, 5), at least one exposure time may be set that is smaller than the quotient of the square of an estimated value of a layer thickness formed by the separation of boundary surfaces and an estimated value for the diffusivity between the boundary surfaces, and that a computing unit (21 to 28) is provided, with which from at least one measurement value situated in the heating-up portion (50, 55) or in a section (51, 56) of the cooling-down portion (52, 53, 57) immediately following the heating-up portion (50, 55) and having a high cooling-down rate corresponding to a heating-up rate of the heating-up portion (50, 55), the effusivity of the test body (1) may be determined.

5. Device according to Claim 4, **characterised in that** a plurality of measurement values may be detected with the detection device (11, 12, 34) in the heating-up portion (50, 55) and/or in the section (51, 56) of the cooling-down portion (52, 53, 57) immediately following the heating-up portion (50, 55) of the emission curve (47, 48, 54).

6. Device according to Claim 4 or 5, **characterised in that** a plurality of measurement values may be detected with the detection device (11, 12, 34) in the section (51, 56) of the cooling-down portion (52, 53, 57) following the heating-up portion (50, 55) up to a multiple of the duration of the heating-up portion (50, 55).

7. Device according to Claim 5, **characterised in that** a model parameter store (21) is provided in which, as parameters, preset values of thermal conductivity and the product of density and specific heat capacity of a substrate (3) and an estimated value of the effusivity and an estimated value of the thickness of a coating (2) on the test body (1) may be stored, that a heat energy measuring unit (23) is provided with which a heat energy measurement parameter value related to the energy of the illuminating radiation (6) irradiating the test body (1) may be determined, that a short-period emission model curve computing unit (22) is provided with which, by means of the heat energy measurement parameter value and the further preset parameters, initial emission model curves may be calculated on variation of the effusivity in the region of the associated estimated value at least in the sections (50, 51, 55, 56) of the emission curves (47, 48, 54) in which there are measured values for determining the effusivity, and that with a short-period emission curve comparison unit (25), the initial emission model curve with the relevant effusivity and the smallest deviations from the measured values may be determined.

8. Device according to Claim 6 or 7, **characterised in that** a long-period emission model curve computing unit (29) is provided, with which, by means of the preset parameters, the sections of the cooling-down portions (52, 53, 57) of a number of cooling model curves may be calculated, on which the measured values lie, and that, with a long-period emission curve comparison unit (25), the cooling-down model curve which has the smallest deviations from the measured values may be determined.

9. Method for photothermal investigation of a test body, whereby the test body (58) is irradiated in an illumination region (66) with illumination radiation (65) for an exposure time and heat radiation (70) emitted by the test body (58) from a detection region (69) is detected, whereby from the chronological sequence of the heat radiation (70) representable by an emission curve with a heating-up portion of increasing amplitude and a cooling-down portion of decreasing amplitude, properties of the test body (58) are determined, **characterised in that** at least two exposure times ($t_p$) are set which are smaller than the quotient of the square of an estimated value of a layer thickness formed by the separation of boundary surfaces and an estimated value of the diffusivity between the boundary surfaces, and that the illumination region (66) and the detection region (69) are separated from each other by a diffusion distance, that the maximum amplitude occurring in each emission curve for each exposure time in the detection region (69) is determined with the associated occurrence time and that from the ratio of at least two maximum amplitudes, the diffusion distance and the associated occurrence times, the diffusivity is determined.

10. Method according to Claim 9, **characterised in that** each exposure time represents no more than half the quotients.

11. Method according to Claim 9 or 10, **characterised in that** the diffusivity of a coating (59) of the test body (58) is determined.

12. Method according to Claim 10 or 11, **characterised in that**, from the diffusivity and an effusivity determined, in particular, with a method according to one of the claims 1 to 3, the product of the density and the specific heat capacity is determined and a thermal conductivity is determined.

13. Device for photothermal investigation of a test body, in particular, for carrying out a method according to one of the claims 9 to 12, having an illumination device (61, 62) with which a test body (58) is irradiatable in an illumination region (66) with illumination radiation (65) for an exposure time, having a detection device (67, 68) with which heat radiation (70) emitted by the test body (58) is detectable from a detection region (69) in time-resolved manner, and having a control and evaluation device (72) with which from the chronological sequence of the heat radiation (70) representable by an emission curve with a heating-up portion of increasing amplitude and a cooling-down portion of decreasing amplitude, properties of the test body (58) may be determined, **characterised in that** with the illumination device (61, 62, 63), at least two exposure times may be set that are smaller than the quotient of the square of an estimated value of a layer thickness formed by the separation of boundary surfaces and an estimated value for the diffusivity between the boundary surfaces, that the illumination region (66) and the detection region (69) are separated from each other by a diffusion distance (r), that with an emission maximum search unit (77), maximum amplitudes occurring in each emission curve may be determined with their associated occurrence times and that with a diffusivity calculation unit (78) a diffusivity may be determined from the ratio of two maximum amplitudes, the diffusion distance and the associated occurrence times.

**14.** Device according to Claim 13, **characterised in that** the illumination region (69) and preferably also the detection region (66) are point-shaped.

**15.** Device according to Claim 13 or 14, **characterised in that** each exposure time corresponds to no more than half the quotient of the square of an estimated value of the thickness of a coating (59) of the test body (58) and an estimated value of the diffusivity of the coating (59).

**16.** Device according to one of the claims 13 to 15, **characterised in that** the shorter exposure time is approximately half the length of the longer exposure time.

**Revendications**

**1.** Procédé d'analyse photothermique d'un échantillon (1), dans lequel un échantillon (1) est exposé à un rayonnement lumineux (6) dans une zone illuminée (8) pendant une durée d'illumination, et le rayonnement thermique (10) émis par l'échantillon (1) à partir d'une zone de détection (9, 35) est détecté avec résolution dans le temps, procédé dans lequel des propriétés de l'échantillon (1) sont déterminées à partir de l'évolution dans le temps du rayonnement thermique (10) pouvant être représenté par une courbe d'émission (47, 48, 54) avec une partie échauffement (50, 55) d'amplitude croissante et une partie refroidissement (52, 53, 57) d'amplitude décroissante, **caractérisé en ce qu'**on met au point une durée d'illumination ($t_p$) qui est plus petite que le quotient résultant du carré d'une valeur estimative d'une épaisseur de couche formée par la distance entre surfaces limites et d'une valeur estimative pour la diffusivité entre les surfaces limites, et en ce qu'on détermine l'effusivité de l'échantillon (1) à partir d'au moins une valeur de mesure située dans la partie échauffement (50, 55) ou une valeur de mesure située dans un segment (51, 56) de la partie refroidissement (52, 53, 57) se rattachant immédiatement à la partie échauffement (50, 55) à taux de refroidissement élevé correspondant à un taux d'échauffement de la partie échauffement (50, 55).

**2.** Procédé suivant la revendication 1, **caractérisé en ce que** la ou chaque valeur de mesure est relevée dans la partie refroidissement (52, 53, 57) se rattachant à la partie échauffement (50, 55).

**3.** Procédé suivant la revendication 1 ou 2, **caractérisé en ce que** l'épaisseur de couche d'une enduction (2) de l'échantillon (1) est déterminée à partir du profil de la courbe d'émission sur une longue durée après détermination de l'effusivité.

**4.** Dispositif d'analyse photothermique d'un échantillon, en particulier pour exécuter un procédé suivant l'une des revendications 1 à 3, comprenant un dispositif d'éclairage (4, 5), avec lequel un échantillon (1) se trouvant dans une zone illuminée (8) peut être exposé à un rayonnement lumineux (6) pendant une durée d'illumination, un dispositif de détection (11) permettant de détecter, avec résolution dans le temps, le rayonnement thermique (10) émis par l'échantillon (1) à partir d'une zone de détection (9, 35), et un dispositif de commande et d'évaluation (14) permettant de déterminer des propriétés de l'échantillon (1) à partir de l'évolution dans le temps du rayonnement thermique (10) pouvant être représenté par une courbe d'émission (47, 48, 54) comprenant une partie échauffement (50, 55) d'amplitude croissante, et une partie refroidissement (52, 53, 57) d'amplitude décroissante, **caractérisé en ce que** le dispositif d'éclairage (4, 5) permet de mettre au point au moins une durée d'illumination qui est plus petite que le quotient résultant du carré d'une valeur estimative d'une épaisseur de couche formée par la distance entre surfaces limites, et d'une valeur estimative pour la diffusivité entre les surfaces limites, et **en ce qu'**on prévoit une unité de calcul (21 à 28) avec laquelle l'effusivité de l'échantillon (1) peut être déterminée à partir d'au moins une valeur de mesure située dans la partie échauffement (50, 55) ou dans un segment (51, 56) de la partie refroidissement (52, 53, 57) se rattachant immédiatement à la partie échauffement (50, 55) à taux de refroidissement élevé correspondant à un taux d'échauffement de la partie échauffement (50, 55).

**5.** Dispositif suivant la revendication 4, **caractérisé en ce que** l'unité de détection (11, 12, 34) permet de détecter plusieurs valeurs de mesure se trouvant dans la partie échauffement (50, 55) et/ou dans le segment (51, 56) de la partie refroidissement (52, 53, 57) de la courbe d'émission (47, 48, 54) se rattachant immédiatement à la partie échauffement (50, 55).

**6.** Dispositif suivant la revendication 4 ou 5, **caractérisé en ce que** le dispositif de détection (11, 12, 34) permet de détecter plusieurs valeurs de mesure se trouvant dans le segment (51, 56) de la partie refroidissement (52, 53, 57) se rattachant à la partie échauffement (50, 55) jusqu'à un multiple de la durée de la partie échauffement (50, 55).

**7.** Dispositif suivant la revendication 5, **caractérisé en ce qu'**on prévoit une mémoire de paramètres modèles (21) dans laquelle peuvent être enregistrées, comme paramètres, des valeurs provisoires pour une conductivité thermique et le produit résultant de la densité et la capacité thermique spécifique d'un substrat (3) ainsi qu'une valeur estimative pour une effusivité et une valeur estimative pour une épaisseur de couche d'une enduction (2) de l'échantillon (1), **en ce qu'**on prévoit une unité de mesure d'énergie chauffante (23) permettant de déterminer une valeur paramétrique de mesure d'énergie chauffante associée à l'énergie du rayonnement lumineux (6) frappant l'échantillon (1), **en ce qu'**on prévoit une unité de calcul de courbes modèles d'émission de brève durée (22) permettant de calculer, au moyen des valeurs paramétriques de mesure d'énergie chauffante et des autres paramètres prédéfinis, des courbes modèles d'émission initiales en cas de variation de l'effusivité de l'ordre de la valeur estimative associée, au moins dans les segments (50, 51, 55, 56) des courbes d'émission (47, 48, 54) dans lesquels se situent des valeurs de mesure relevées pour déterminer l'effusivité, et **en ce qu'**une unité de comparaison de courbes d'émission de brève durée (25) permet de déterminer la courbe modèle d'émission initiale ayant l'effusivité correspondante qui présente les écarts les plus faibles par rapport aux valeurs de mesure.

**8.** Dispositif suivant la revendication 6 ou 7, **caractérisé en ce qu'**on prévoit une unité de calcul de courbes modèles d'émission de longue durée (29) permettant de calculer, au moyen des paramètres prédéfinis, les segments des parties refroidissement (52, 53, 57) d'un certain nombre de courbes modèles de refroidissement, dans lesquels se situent les valeurs de mesure, et **en ce qu'**une unité de comparaison de courbes d'émission de longue durée (25) permet de déterminer la courbe modèle de refroidissement présentant les écarts les plus faibles par rapport aux valeurs de mesure.

**9.** Procédé d'analyse photothermique d'un échantillon (1), dans lequel l'échantillon (58) se trouvant dans une zone illuminée (66) est exposé à un rayonnement lumineux (65) pendant une durée d'illumination et le rayonnement thermique (70) émis par l'échantillon (58) à partir d'une zone de détection (69) est détecté, procédé avec lequel on détermine des propriétés de l'échantillon (58) à partir de l'évolution dans le temps d'un rayonnement thermique (70) pouvant être représenté par une courbe d'émission avec une partie échauffement d'amplitude croissante et une partie de refroidissement d'amplitude décroissante,
**caractérisé en ce**
**qu'**on met au point au moins deux durées d'illumination ($t_P$) qui sont plus petites que le quotient résultant du carré d'une valeur estimative d'une épaisseur de couche formée par la distance entre surfaces limites et d'une valeur estimative pour la diffusivité entre les surfaces limites, en ce que la zone illuminée (66) et la zone de détection (69) sont espacées l'une de l'autre d'un intervalle de diffusion, en ce que l'amplitude maximale de chaque courbe d'émission s'établissant pour chaque durée d'illumination dans la zone de détection (69) est déterminée avec les temps de mise au point correspondants, et en ce que la diffusivité est déterminée à partir du rapport entre deux amplitudes maximales, de l'écart de diffusion et des temps de mise au point correspondants.

**10.** Procédé suivant la revendication 9, **caractérisé en ce que** chaque durée d'illumination correspond au maximum à la moitié du quotient.

**11.** Procédé suivant la revendication 9 ou 10, **caractérisé en ce qu'**on détermine la diffusion d'une enduction (59) de l'échantillon (58).

**12.** Procédé suivant la revendication 10 ou 11, **caractérisé en ce qu'**à partir de la diffusivité et d'une effusivité déterminée en particulier suivant un procédé répondant à l'une des revendications 1 à 3, on détermine le produit résultant de la densité et de la capacité thermique spécifique ainsi qu'une conductivité thermique.

**13.** Dispositif d'analyse photothermique d'un échantillon, en particulier pour exécuter un procédé suivant les revendications 9 à 12, comprenant un dispositif d'éclairage (61, 62) avec lequel un échantillon (1) se trouvant dans une zone illuminée (66) peut être exposé à un rayonnement lumineux (65) pendant une durée d'illumination, un dispositif de détection (67, 68) permettant de détecter, avec résolution dans le temps, un rayonnement thermique (70) émis par l'échantillon (1) à partir d'une zone de détection (69), et un dispositif de commande et d'évaluation (72) permettant de déterminer des propriétés de l'échantillon (58) à partir de l'évolution dans le temps d'un rayonnement thermique (70) pouvant être représenté par une courbe d'émission comprenant une partie échauffement d'amplitude croissante et une partie refroidissement d'amplitude décroissante,

**caractérisé en ce que**

le dispositif d'éclairage (61, 62, 63) permet de mettre au point au moins deux durées d'illumination qui sont plus petites que le quotient résultant du carré d'une valeur estimative d'une épaisseur de couche formée par la distance entre des surfaces limites et d'une valeur estimative pour la diffusivité entre les surfaces limites, **en ce que** la zone illuminée (66) et la zone de détection (69) sont espacées l'une de l'autre par un écart de diffusion (r), **en ce qu'**une unité de recherche de maximum d'émission (77) permet de déterminer les amplitudes maximales de chaque courbe d'émission avec les temps de mise au point associés qui s'établissent pour chaque durée d'illumination dans la zone de détection (69), et **en ce qu'**une unité de calcul de diffusivité (78) permet de déterminer une diffusivité à partir du rapport entre deux amplitudes maximales, de l'écart de diffusion et des temps de mise au point associés.

**14.** Dispositif suivant la revendication 13, **caractérisé en ce que** la zone illuminée (69) et de préférence aussi la zone de détection (66) sont en forme de points.

**15.** Dispositif suivant la revendication 13 ou 14, **caractérisé en ce que** chaque durée d'illumination correspond au maximum à la moitié du quotient résultant du carré d'une valeur estimative pour l'épaisseur de couche d'une enduction (59) de l'échantillon (58) et d'une valeur estimative pour la diffusivité de l'enduction (2).

**16.** Dispositif suivant l'une des revendications 13 à 15, **caractérisé en ce que** la durée d'illumination plus courte est d'environ la demi-longueur de la durée d'illumination plus longue.

**Fig. 1**

Fig. 2

**Fig. 3**

Fig. 4

Fig. 5

EP 1 029 232 B1

Fig. 6

**Fig. 7**

Fig. 8